# EUROPÄISCHE PATENTSCHRIFT

(11) **EP 4 575 257 B1**
(45) Veröffentlichungstag und Bekanntmachung des Hinweises auf die Patenterteilung: **09.12.2026**
(21) Anmeldenummer: 24219711.9
(22) Anmeldetag: 13.12.2024
(51) Int. Cl.: F16D 41/24

(54) **FREILAUFANORDNUNG EINES FAHRZEUGS**
FREEWHEEL ASSEMBLY OF A VEHICLE
DISPOSITIF DE ROUE LIBRE D'UN VÉHICULE

(30) Priorität: 22.12.2023 DE 102023213317
(43) Veröffentlichungstag der Anmeldung: 25.06.2025
(73) Patentinhaber: Robert Bosch GmbH, 70442 Stuttgart (DE)
(72) Erfinder: Hermann, Hannes, 72072 Tuebingen (DE)

(56) Entgegenhaltungen:
- EP-A1- 4 249 362
- WO-A1-2024/245826
- DE-A1- 102023 201 702
- DE-A1- 102024 204 555
- GB-A- 1 354 061
- US-A- 3 866 726
- US-A1- 20240 208 606
- US-A1- 20240 208 606
- US-B2- 12 163 560

## Beschreibung

### Stand der Technik

Die vorliegende Erfindung betrifft eine Freilaufanordnung eines Fahrzeugs, sowie ein Fahrzeug.

In Fahrzeugen, wie beispielsweise Elektrofahrrädern, sind bisher Freiläufe bekannt, welche dazu eingerichtet sind, eine Verbindung zwischen einem angetriebenen Abtriebselement und einem Motorgetriebe, welches mit dem Antriebsmotor verbunden ist, zu unterbrechen, wenn das angetriebene Abtriebselement bezüglich der vorwärts gerichteten Drehrichtung schneller läuft als ein Ausgang des Motorgetriebes, das heißt in derjenigen Drehrichtung, welche einen Antrieb des Fahrzeugs in vorwärts gerichteter Fahrtrichtung verursacht. Bei wechselnden mechanischen Belastungen im Antriebsstrang, wie beispielsweise durch Schwingungen an einer Kette, die bei einer Fahrt über eine unebene Strecke auftreten können, und die zu wechselnden Rotationsbewegungen am Kettenblatt und damit am Abtriebselement führen können, können durch ein vorhandenes Getriebespiel unerwünschte Geräusche auftreten.

Eine bekannte Freilaufanordnung ist in DE 10 2023 201 702 A1 gezeigt. Ferner offenbaren EP 4 249 362 A1 und US 3 866 726 A weitere Antriebsanordnungen von Fahrzeugen.

### Offenbarung der Erfindung

Die erfindungsgemäße Freilaufanordnung mit den Merkmalen des Anspruchs 1 zeichnet sich demgegenüber durch eine besonders vorteilhafte Konstruktion aus, die bei einer einfachen Herstellbarkeit eine besonders effiziente Vermeidung von Geräuschen ermöglicht. Dies wird erfindungsgemäß erreicht durch eine Freilaufanordnung eines Fahrzeugs, vorzugsweise eines Elektrofahrrads, umfassend ein Zahnrad, eine Abtriebswelle, einen Freilauf, ein Reibelement, und ein Gehäuse. Der Freilauf ist eingerichtet, um bei einer relativen Rotation von dem Zahnrad und der Abtriebswelle in umfassend ein Zahnrad, eine Abtriebswelle, einen Freilauf, ein Reibelement, und ein Gehäuse. Der Freilauf ist eingerichtet, um bei einer relativen Rotation von dem Zahnrad und der Abtriebswelle in Sperrrichtung eine Drehmomentübertragung vom Zahnrad an die Abtriebswelle zu bewirken, insbesondere über den Freilauf selbst. Bei einer relativen Rotation von Zahnrad und Abtriebselement in, insbesondere zur Sperrrichtung entgegengesetzter, Freilaufrichtung verhindert der Freilauf die Drehmomentübertragung zwischen Zahnrad und Abtriebswelle. Dabei ist das Reibelement ausgebildet, um ein vorbestimmtes Reibmoment zwischen dem Zahnrad und dem Gehäuse zu erzeugen.

Insbesondere kann die Abtriebswelle mit einem weiteren Antriebsstrang des Fahrzeugs, beispielsweise über ein Kettenblatt und vorzugsweise eine Kette, verbunden sein.

Das Gehäuse kann beispielsweise ein Gehäuse zur Halterung und/oder Lagerung von Komponenten der Freilaufanordnung und beispielsweise weiteren Komponenten des Fahrzeugs sein. Vorzugsweise sind Zahnrad und Abtriebswelle drehbar im Gehäuse gelagert. Mit anderen Worten ist das Gehäuse ein feststehender Teil, relativ zu welchem das Zahnrad und die Abtriebswelle rotierbar angeordnet sind.

Mit anderen Worten wird eine Freilaufanordnung bereitgestellt, welche einen Freilauf zwischen einem Zahnrad, welches beispielsweise das letzte Zahnrad eines Getriebes einer Antriebsanordnung des Fahrzeugs bilden kann, und einer Abtriebswelle, an die insbesondere ein Abtriebsmoment übertragen wird, das beispielsweise zum Vortrieb des Fahrzeugs vorgesehen ist, aufweist. Zwischen dem feststehenden Gehäuse und dem Zahnrad ist dabei ein Reibelement vorgesehen, welches ein vorbestimmtes Reibmoment zwischen Zahnrad und Gehäuse bewirkt. Durch das Reibmoment wird insbesondere das Zahnrad mit einer entsprechenden vorbestimmten Reibkraft relativ zum Gehäuse festgehalten, beispielsweise solange das Reibmoment bzw. die Reibkraft nicht überschritten wird.

Die Freilaufanordnung bietet dabei den Vorteil, dass wechselnde externe Drehimpulse, die an der Abtriebswelle auftreten können und über den Freilauf an das Zahnrad übertragen werden, sich nicht negativ auf eine Geräuschentwicklung am Zahnrad auswirken. Im Detail kann, insbesondere wenn das Zahnrad mit einem weiteren Zahnrad im Zahneingriff steht, durch das zusätzliche Reibmoment mittels des Reibelements sichergestellt werden, dass stets die lastübertragenden Flanken des Zahnrads im Eingriff sind. Das heißt, diejenigen Zahnflanken des Zahnrads, die bei der Drehmomentübertragung vom Zahnrad über den Freilauf an die Abtriebswelle im Eingriff mit beispielsweise dem weiteren Getriebezahnrad sein können, bleiben durch das Reibmoment auch bei einer entgegengesetzten Rotation der Abtriebswelle im Eingriff. Das heißt, durch das zusätzliche Reibmoment des Reibelements wird verhindert, dass das Zahnrad durch beispielsweise eine Freilauf-Reibung der Freilauf in Freilaufrichtung mitgeschleppt wird. Werden dann externe Drehimpulse über den Freilauf auf das Zahnrad eingebracht, so werden diese direkt über den bereits bestehenden Kontakt an der Lastflanke des Zahnrads weiter übertragen, beispielsweise direkt in das Getriebe. Somit kann durch das Reibelement verhindert werden, dass bei wechselnden Drehrichtungen im Antriebsstrang, beispielsweise aufgrund von Kettenschwingungen durch unebenen Untergrund, ein wechselndes Aufeinanderschlagen von Zahnflanken am Fahrrad durch Überwindung eines Flankenspiels auftritt. Somit kann in der Folge eine Geräuschentwicklung, wie beispielsweise ein "Klackern" vermieden werden.

Die Unteransprüche haben bevorzugte Weiterbildungen der Erfindung zum Inhalt.

Bevorzugt umfasst die Freilaufanordnung mindestens ein Paar an bezüglich der Abtriebswelle diametral gegenüberliegenden Reibelementen. Besonders bevorzugt umfasst die Freilaufanordnung zwei Paare an Reibelementen, das heißt insgesamt vier Reibelemente, welche insbesondere gleichmäßig um den Umfang verteilt angeordnet sind. Dadurch kann das Reibelement besonders gleichmäßig und gezielt erzeugt werden. Insbesondere können störende oder sich negativ auswirkende Kräfte und Momente vermieden werden.

Besonders bevorzugt ist das Reibelement derart ausgebildet, um das Reibmoment mittels einer radialen Reibkraft zu erzeugen. Mit anderen Worten ist das Reibelement ausgebildet, um die radiale Reibkraft zu bewirken und somit, insbesondere mittels eines entsprechenden radialen Reibschlusses, das Reibmoment zwischen dem Zahnrad und dem Gehäuse zu bewirken. Somit kann das Reibmoment mittels einer besonders einfachen und kostengünstigen Konstruktion erzeugt werden. Besonders vorteilhaft bei der Ausgestaltung mit radialer Reibkraft ist, insbesondere wenn eine radiale Reibkraft symmetrisch bezüglich einer Abtriebsachse der Abtriebswelle aufgebracht wird, dass sich die notwendigen Kräfte für die Reibung gegenseitig aufheben und dadurch keine zusätzliche Kraftkomponente zwischen Freilauf und Welle entsteht, welche beispielsweise zu einer zusätzlichen Reibung führen würde, die dem gewünschten Reibmoment zwischen Zahnrad und Gehäuse entgegenwirken würde.

Vorzugsweise ist das Reibelement derart ausgebildet, um das Reibmoment mittels einer axialen Reibkraft zu erzeugen. Mit anderen Worten ist das Reibelement ausgebildet, um die axiale Reibkraft zu bewirken und somit, insbesondere mittels eines entsprechenden axialen Reibschlusses, das Reibmoment zwischen dem Zahnrad und dem Gehäuse zu bewirken. Damit kann beispielsweise mittels einer in radialer Richtung besonders platzsparenden Konstruktion das Reibmoment bereitgestellt werden.

Bevorzugt weist das Reibelement einen Reibarm und einen Reibring auf. Reibarm und Reibring stehen dabei in mechanischen Kontakt miteinander, um durch diesen mechanischen Kontakt das Reibmoment zu erzeugen. Mit anderen Worten ist das Reibelement zumindest zweiteilig ausgebildet und umfasst, vorzugsweise zumindest einen, Reibarm und einen Reibring. Beispielsweise können auch mehrere Reibarme vorgesehen sein. Als Reibarm kann insbesondere ein vorstehendes, zumindest teilweise elastisch nachgiebiges Bauteil angesehen werden, das insbesondere mittels einer elastischen Kraft gegen den Reibring drückt. Damit kann bei einfacher und kostengünstiger Konstruktion besonders zuverlässig das vorbestimmte Reibmoment erzeugt werden.

Weiter bevorzugt ist der, insbesondere zumindest eine, Reibarm am Zahnrad fixiert, wobei der Reibring am Gehäuse fixiert ist. Beispielsweise kann der Reibarm an einem Bereich des Zahnrads radial innerhalb einer Verzahnung fixiert sein, und beispielsweise zumindest teilweise in axialer Richtung vorstehend ausgebildet sein. Der Reibring kann beispielsweise integraler Bestandteil des Gehäuses sein, oder alternativ bevorzugt als zusätzliches Bauteil ausgebildet sein, das am Gehäuse fixiert ist. Damit kann eine besonders einfache und kostengünstige Konstruktion und Herstellbarkeit der Freilaufanordnung ermöglicht werden.

Vorzugsweise ist der, insbesondere zumindest eine, Reibarm am Gehäuse fixiert, wobei der Reibring am Zahnrad fixiert ist. Beispielsweise kann der Reibarm integraler Bestandteil des Gehäuses sein, oder alternativ als zusätzliches Bauteil ausgebildet sein, das am Gehäuse befestigt ist. Weiter bevorzugt kann der Reibring integraler Bestandteil des Zahnrads sein, oder alternativ bevorzugt als zusätzliches Bauteil ausgebildet sein, das am Zahnrad fixiert ist.

Besonders bevorzugt ist der Reibarm blechförmig ausgebildet. Insbesondere ist der Reibarm vollständig aus einem Blech, vorzugsweise einem Metallblech, ausgebildet. Dadurch kann eine einfache Herstellbarkeit mit flexibler Geometrie ermöglicht werden. Zudem kann auf einfache Weise eine elastische Nachgiebigkeit bereitgestellt werden, um durch eine elastische Federkraft den mechanischen Kontakt für das Reibmoment herzustellen.

Weiter bevorzugt weist der Reibarm einen Basisbereich und mindestens einen Reibbereich auf. Der Reibbereich erstreckt sich ausgehend vom Basisbereich in Umfangsrichtung. Der Reibbereich weist dabei eine Reibfläche auf, welche in mechanischem Kontakt mit dem Reibring steht, um das Reibmoment zu erzeugen. Beispielsweise kann zwischen Reibfläche und Reibring ein punktförmiger Kontakt vorgesehen sein. Alternativ bevorzugt kann ein Linienkontakt oder ein Flächenkontakt ausgebildet sein. Bevorzugt weist der Reibarm zwei Reibbereiche auf. Die beiden Reibbereiche erstrecken sich jeweils entgegengesetzt und ausgehend vom Basisbereich in Umfangsrichtung. Jeder der Reibbereiche weist dabei jeweils eine Reibfläche auf. Dadurch kann eine besonders einfache und kostengünstige Konstruktion des Reibelements bereitgestellt werden, um zuverlässig und definiert den Reibschluss zwischen Zahnrad und Abtriebswelle herzustellen.

Vorzugsweise ist der Freilauf als ein Klemmrollenfreilauf ausgebildet. Dadurch kann bei einfacher und besonders kostengünstiger Konstruktion eine zuverlässige Freilauf- und Sperrfunktion bereitgestellt werden.

Alternativ bevorzugt kann der Freilauf auch auf andere Weise ausgebildet sein, beispielsweise als Klemmkörperfreilauf, oder als einzelnen angefederter Freilauf, oder als zentral angefederter Freilauf.

Weiterhin führt die Erfindung zu einem Fahrzeug, bevorzugt einem Elektrofahrrad, das die beschriebene Freilaufanordnung umfasst.

Bevorzugt umfasst das Fahrzeug ferner eine Antriebseinheit, welche mit dem Zahnrad, insbesondere drehmomentübertragend, verbunden ist, und einen Kurbeltrieb, der, insbesondere drehfest, mit der Kurbelwelle verbunden ist. Insbesondere ist der Freilauf somit zwischen einem Getriebe der Antriebseinheit und der Abtriebswelle, welche insbesondere eine Tretwelle bzw. Kurbelwelle des Fahrzeugs bildet, angeordnet. Der Freilauf kann beispielsweise auch als Motorfreilauf bezeichnet werden.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrzeugs mit einer Freilaufanordnung gemäß einem ersten Ausführungsbeispiel der Erfindung,
- Figur 2: eine Detail-Schnittansicht der Freilaufanordnung der Figur 1,
- Figur 3: eine perspektivische Ansicht eines Details der Freilaufanordnung der Figur 1,
- Figur 4: eine Detail-Schnittansicht einer Freilaufanordnung gemäß einem zweiten Ausführungsbeispiel der Erfindung,
- Figur 5: eine perspektivische Ansicht eines Details der Freilaufanordnung der Figur 4,
- Figur 6: eine Detail-Schnittansicht einer Freilaufanordnung gemäß einem dritten Ausführungsbeispiel der Erfindung, und
- Figur 7: eine vereinfachte schematische Detailansicht eines Wirkprinzips der erfindungsgemäßen Freilaufanordnung.

### Bevorzugte Ausführungsformen der Erfindung

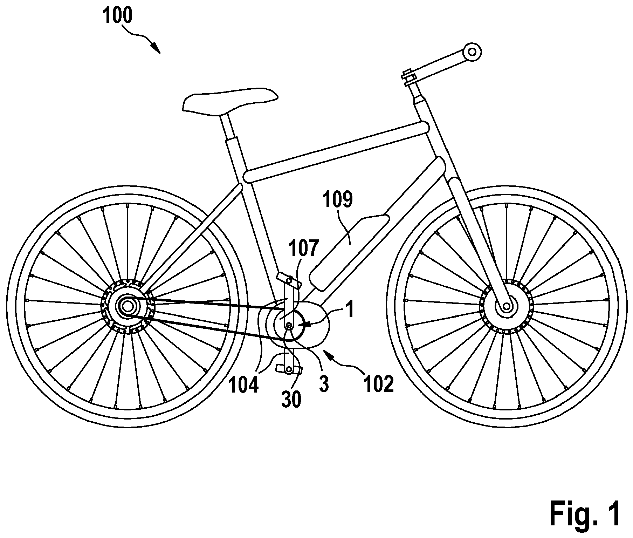

Figur 1 zeigt eine vereinfachte schematische Ansicht eines Fahrzeugs 100, das eine Freilaufanordnung 1 gemäß einem ersten Ausführungsbeispiel der Erfindung umfasst. Bei dem Fahrzeug 100 handelt es sich um ein mit Muskelkraft und/oder Motorkraft betreibbares Fahrzeug 100, im Detail um ein Elektrofahrrad.

Das Elektrofahrrad 100 umfasst eine Antriebseinheit 102, die einen Motor umfasst, der insbesondere ein Elektromotor ist. Der Motor kann mittels eines elektrischen Energiespeichers 109 des Elektrofahrrads 100 mit elektrischer Energie versorgt werden.

Die Antriebseinheit 102 ist im Bereich eines Tretlagers des Elektrofahrrads 100 angeordnet. Durch ein mittels des Motors erzeugten Motordrehmoments kann eine durch Muskelkraft erzeugte Tretkraft eines Fahrers des Elektrofahrrads 100 motorisch unterstützt werden.

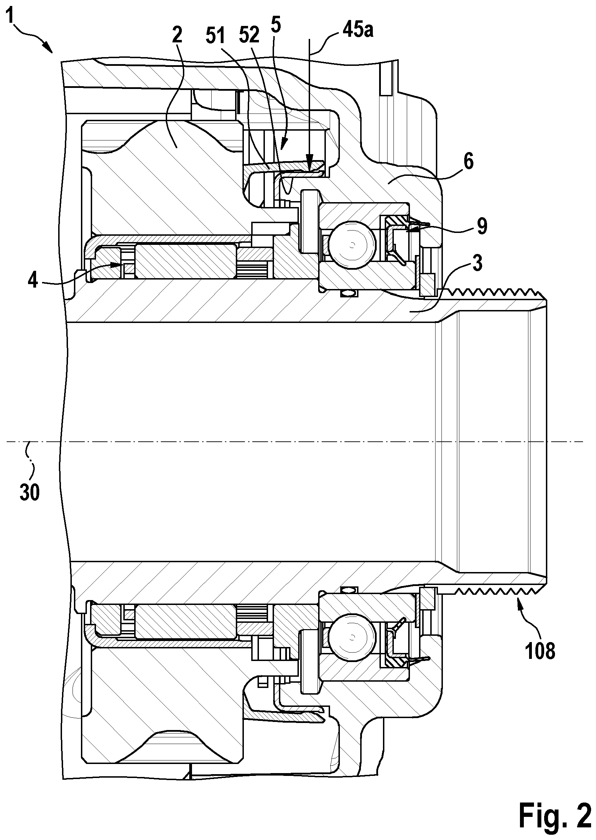

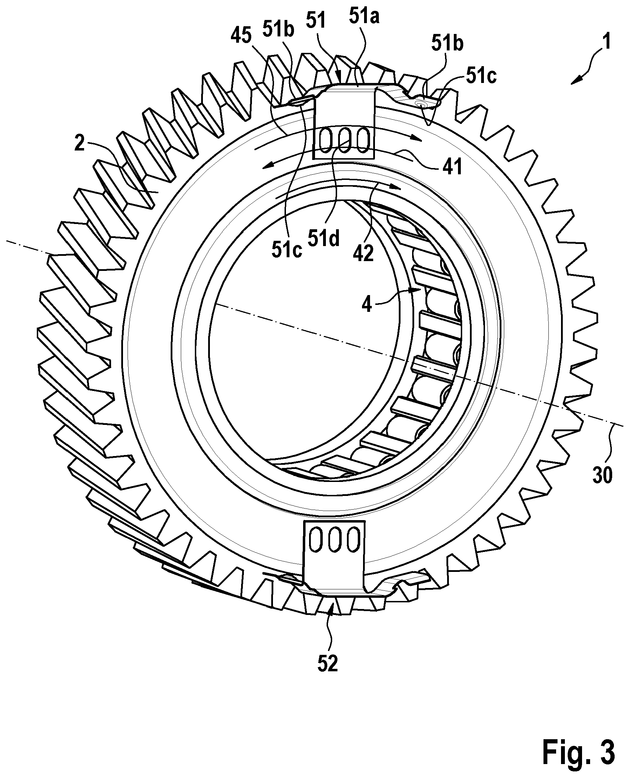

Die Muskelkraft des Fahrers kann dabei über einen Kurbeltrieb 104, welcher Kurbeln umfasst, auf eine Abtriebswelle 3, aufgebracht werden. Die Abtriebswelle 3 erstreckt sich entlang einer Abtriebsachse 30. Koaxial zur Abtrieswelle 3 ist ein Zahnrad 2 der Antriebseinheit 102 angeordnet (vgl. Figur 2 und 3).

Das Zahnrad 2 bildet dabei das letzte Zahnrad eines (nicht dargestellten) Getriebes der Antriebseinheit 102. Über das Getriebe kann der Motor das Tretmoment an das Zahnrad 2 übertragen.

Die Abtriebswelle 3 umfasst zudem einen Verbindungsbereich 108, an welchem ein Abtriebselement 107, welches insbesondere ein Kettenblatt ist, drehfest befestigt ist (vgl. Figur 1).

Zwischen dem Zahnrad 2 und der Abtriebswelle 3 befindet sich ein Freilauf 4, welcher im dargestellten Ausführungsbeispiel als Klemmrollenfreilauf ausgebildet ist. Bei relativer Rotation des Zahnrads 2 in Sperrrichtung 42 zur Abtriebswelle 3 (vergleiche Figur 3) sperrt der Freilauf 4 und bewirkt eine Drehmomentübertragung zwischen Zahnrad 2 und Abtriebswelle 3. Bei entgegengesetzter relativer Rotation des Zahnrads 2 in Freilaufrichtung 41 relativ zur Abtriebswelle 3 gibt der Freilauf 4 die Rotation frei und verhindert die Drehmomentübertragung.

Es sei angemerkt, dass in den Figuren die "Freilaufrichtung 41" und die "Sperrrichtung 42" jeweils aus Sicht des Zahnrads 2 definiert und dargestellt sind. Beispielsweise aus Sicht der Abtriebswelle 3 würden sich sinngemäß umgekehrte Richtungen bezüglich des Freigebens und Sperren des Freilaufs 4 ergeben.

Die Antriebseinheit 102 kann dabei bei gesperrtem Freilauf 4 über das Zahnrad 2 und den Freilauf 4 die Abtriebswelle 3 mittels des erzeugten Motordrehmoments antreiben.

Zudem umfasst die Antriebseinheit 102 ein Gehäuse 6, welches zur Aufnahme und Halterung von Komponenten der Antriebseinheit 102 und Freilaufanordnung 1 vorgesehen ist. Zudem kann das Gehäuse 6 eingerichtet sein zur Montage an einem Fahrradrahmen des Elektrofahrrads 100.

Insbesondere ist die Abtriebswelle 3 über Tretlager 9 in dem Gehäuse 6 drehbar gelagert.

Die Freilaufanordnung 1 umfasst ferner ein Reibelement 5, welches mehrteilig ausgebildet ist. Das Reibelement 5 umfasst mehrere Reibarme 51 und einen Reibring 52.

Der Reibring 52 ist vorzugsweise als Metallring ausgebildet, der insbesondere als separates Bauteil ausgebildet ist und an einer Lagerschale des Gehäuses 6 fixiert ist.

Die Reibarme 51 sind blechförmig ausgebildet und am Zahnrad 2 fixiert. Dabei sind die Reibarme 51 bezüglich der Abtriebsachse 30 diametral gegenüberliegend angeordnet.

Im Detail weist jeder Reibarm 51 einen Befestigungsbereich 51d auf, der an einer axialen Stirnseite des Zahnrads 2, beispielsweise mittels einer Schweißverbindung, fixiert ist. Zudem weist jeder Reibarm einen Basisbereich 51a auf, der sich ausgehend vom Befestigungsbereich 51d im Wesentlichen in axialer Richtung erstreckt. Ferner weist jeder Reibarm 51 zwei Reibbereiche 51b auf, die sich jeweils entgegengesetzt und ausgehend vom Basisbereich 51a in Umfangsrichtung erstrecken. An jedem Reibbereich 51b ist dabei eine Reibfläche 51c ausgebildet, die in mechanischem Kontakt mit dem Reibring 52, der sich radial innerhalb befindet, steht.

Die Reibarme 51 sind dabei derart ausgebildet, um mit einer vorbestimmten radialen Reibkraft 45a nach radial innen gegen den Reibring 52 zu drücken (vergleiche Figur 2). Dadurch wird gezielt ein vorbestimmtes erhöhtes Reibmoment 45 erzeugt, wenn Zahnrad 2 und Abtriebswelle 3 relativ zueinander rotiert werden (vergleiche Figur 3). Insbesondere wird dabei das Reibmoment 45 bei Stillstand von Zahnrad 2 und Abtriebswelle 3 bzw. allgemein bei keiner relativen Rotation von Zahnrad 2 und Abtriebswelle 3 durch eine Haftreibung zwischen Reibring 53 und Reibarmen 51 erzeugt. Dargestellt ist dabei in der Figur 3 beispielhaft ein stehendes, relativ zum Gehäuse 6 nicht rotierendes Zahnrad 2. Wenn das Zahnrad 2 relativ zur Abtriebswelle 3 in der Freilaufrichtung 41 rotiert, bewirkt der Reibschluss zwischen Zahnrad 2 und Gehäuse 6 durch das Reibelement 5 das entgegengesetzt zur Freilaufrichtung 41 wirkende Reibmoment 45.

Das Reibmoment 45 bewirkt dabei, dass die bei der Drehmomentübertragung bei Rotation in Sperrrichtung 42 in Eingriff stehenden Zahnflanken des Zahnrads 2 auch dann wenn, insbesondere zumindest kurzzeitig, die Abtriebswelle 3 eine derartige Rotation zum Freigeben des Freilaufs 4 ausführt, welche beispielsweise aufgrund von Kettenschwingungen durch unebenen Untergrund auftreten kann, im Eingriff bleibt. Eine solche Rotation würde beispielsweise gemäß obiger Definition und Fig. 3 analog zu einer Rotation des Zahnrads 2 in Freilaufrichtung 41 relativ zur Abtriebswelle 3 sein.

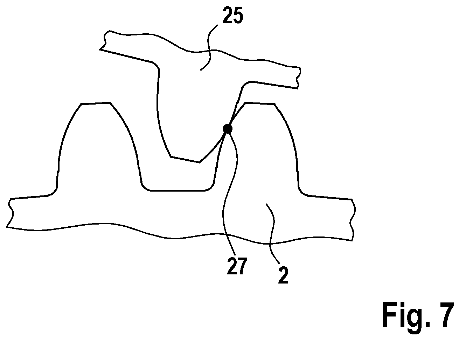

Die in Eingriff stehenden Zahnflanken sind beispielhaft in der Figur 7 dargestellt. Figur 7 zeigt dabei einen Zahneingriff zwischen dem Zahnrad 2 und einem weiteren Getriebezahnrad 25 der Antriebseinheit 102. Beispielsweise wird das vom Motor erzeugte Drehmoment vom Getriebezahnrad 25 an das Zahnrad 2 übertragen. Zahnflanken der beiden Zahnräder 2, 25 stehen dabei an einem Zahneingriffspunkt 27 in Kontakt miteinander.

Durch das Reibmoment 45 wird dabei erreicht, dass die Zahnflanken der beiden Zahnräder 2, 25 stets am Zahneingriffspunkt 27 in Kontakt miteinander bleiben, auch wenn eine Rotation der Abtriebswelle 3 relativ zum Zahnrad 2 erfolgt, die ein Öffnen des Freilaufs 4 bewirken würde. Dadurch wird vermieden, dass die Zahnräder 2, 25 relativ zueinander bewegt werden und die gegenüberliegenden, nicht in Eingriff stehenden Zahnflanken gegeneinander anschlagen können. Dadurch können unerwünschte Geräusche durch ungewollte Zahnflankenstöße vermieden werden. Somit kann beispielsweise ein "Klackern" des Getriebes vermieden werden.

Vorzugsweise ist das Reibelement 5 dabei derart ausgelegt, dass das erzeugte Reibmoment 45 größer ist als ein über den Freilauf 4 übertragenes Freilauf-Reibmoment in Freilaufrichtung 41. Das heißt, dass das mittels des Reibelements 5 zusätzlich erzeugte Reibmoment 45 verhindert, dass bei Rotation der Abtriebswelle 3 im Uhrzeigersinn relativ zum Zahnrad 2 (was analog einer Rotation des Zahnrads 2 in Freilaufrichtung 41 zur Abtriebswelle 3 ist) durch ein vorhandenes Freilauf-Reibmoment des Freilaufs 5 das Zahnrad 2 mitgeschleppt wird, was zu den wechselnden Flankenstößen führen würde. Somit kann mittels der Freilaufanordnung 1 bei besonders einfacher und kostengünstiger Konstruktion eine besonders geräuscharme Betriebsweise der Antriebsanordnung 102 bereitgestellt werden.

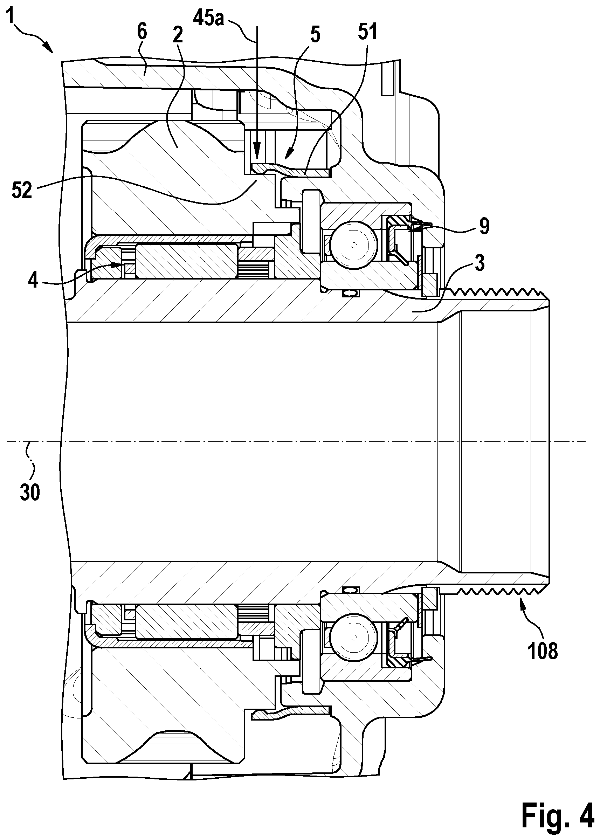

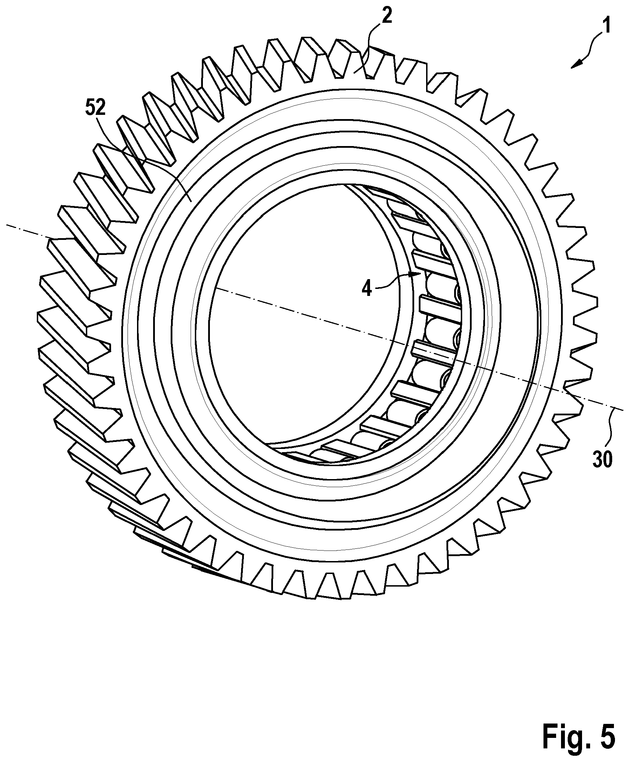

Die Figur 4 zeigt eine Detail-Schnittansicht einer Freilaufanordnung 1 gemäß einem zweiten Ausführungsbeispiel der Erfindung. In Figur 5 ist eine perspektivische Ansicht eines Details der Freilaufanordnung 1 der Figur 4 dargestellt. Das zweite Ausführungsbeispiel entspricht im Wesentlichen dem ersten Ausführungsbeispiel der Figuren 1 bis 3, mit dem Unterschied einer alternativen Ausgestaltung und Anordnung des Reibelements 5. Im zweiten Ausführungsbeispiel sind die Reibarme 51 am Gehäuse 6 fixiert. Der Reibring 52 ist dabei integraler Bestandteil des Zahnrads 2. Insbesondere können Zahnrad 2 und Reibring 52 somit als ein gemeinsames einstückiges Bauteil ausgebildet sein. Dadurch kann eine alternative Geometrie und Konstruktion bereitgestellt werden, welche eine einfache und kostengünstige Herstellung erlaubt.

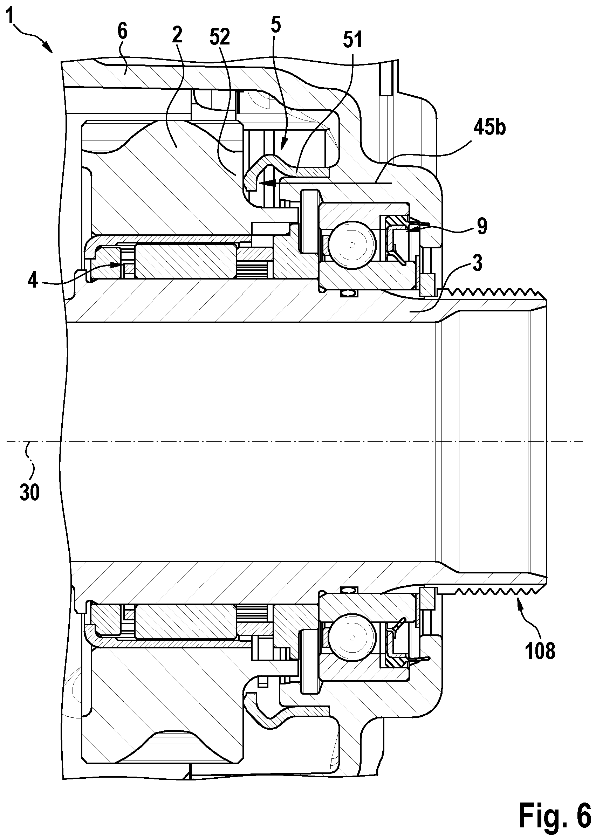

Figur 6 zeigt eine Detail-Schnittansicht einer Freilaufanordnung 1 gemäß einem dritten Ausführungsbeispiel der Erfindung. Das dritte Ausführungsbeispiel entspricht im Wesentlichen dem zweiten Ausführungsbeispiel der Figuren 4 und 5, mit dem Unterschied einer alternativen Ausgestaltung des Reibelements 5 derart, dass anstatt einer radialen Reibkraft 45a eine axiale Reibkraft 45b erzeugt wird. Hierbei sind die Reibarme 51 derart am Gehäuse 6 befestigt, dass diese in axialer Richtung, insbesondere elastisch, gegen eine axiale Stirnseite des Zahnrads 2, welche somit den Reibring 52 bildet, drücken. Dadurch kann eine weitere alternative Konstruktion und Geometrie bereitgestellt werden, die eine vorteilhafte Funktion und Herstellbarkeit bietet.

## Patentansprüche

1. Freilaufanordnung eines Fahrzeugs (100), insbesondere eines Elektrofahrrads, umfassend:
- ein Zahnrad (2),
- eine Abtriebswelle (3),
- einen Freilauf (4),
- ein Reibelement (5), und
- ein Gehäuse (6),
- wobei der Freilauf (4) eingerichtet ist, um bei einer relativen Rotation von Zahnrad (2) und Abtriebswelle (3) in Sperrrichtung (42) eine Drehmomentübertragung vom Zahnrad (2) an die Abtriebswelle (3) zu bewirken, und um bei einer relativen Rotation von Zahnrad (2) und Abtriebswelle (3) in Freilaufrichtung (41) die Drehmomentübertragung zu verhindern, wobei
- das Gehäuse (6) ein feststehender Teil ist, relativ zu welchem das Zahnrad (2) und die Abtriebswelle (3) rotierbar angeordnet sind, und
- **dadurch gekennzeichnet, dass** das Reibelement (5) ausgebildet ist, um ein vorbestimmtes Reibmoment (45) unmittelbar zwischen dem Zahnrad (2) und dem Gehäuse (6) zu erzeugen.

2. Freilaufanordnung nach Anspruch 1, umfassend mindestens ein Paar an bezüglich der Abtriebswelle (3) diametral gegenüberliegenden Reibelementen (5).

3. Freilaufanordnung nach einem der vorhergehenden Ansprüche, wobei das Reibelement (5) derart ausgebildet ist, um das Reibmoment (45) mittels einer radialen Reibkraft (45a) zu erzeugen.

4. Freilaufanordnung nach einem der vorhergehenden Ansprüche, wobei das Reibelement (5) derart ausgebildet ist, um das Reibmoment (45) mittels einer axialen Reibkraft (45b) zu erzeugen.

5. Freilaufanordnung nach einem der vorhergehenden Ansprüche, wobei das Reibelement (5) einen Reibarm (51) und einen Reibring (52) aufweist, welche in mechanischen Kontakt miteinander stehen, um das Reibmoment (45) zu erzeugen.

6. Freilaufanordnung nach Anspruch 5, wobei der Reibarm (51) am Zahnrad (2) fixiert ist, und wobei der Reibring (52) am Gehäuse (6) fixiert ist.

7. Freilaufanordnung nach Anspruch 5, wobei der Reibarm (51) am Gehäuse (6) fixiert ist, und wobei der Reibring (52) am Zahnrad (2) fixiert ist.

8. Freilaufanordnung nach einem der Ansprüche 5 bis 7, wobei der Reibarm (51) blechförmig ausgebildet ist.

9. Freilaufanordnung nach einem der Ansprüche 5 bis 8, wobei der Reibarm (51) einen Basisbereich (51a) und mindestens einen Reibbereich (51b) aufweist, wobei der Reibbereiche (51b) sich und ausgehend vom Basisbereich (51a) in Umfangsrichtung erstreckt, und wobei der Reibbereiche (51b) eine Reibfläche (51c) aufweist, die in Kontakt mit dem Reibring (52) steht.

10. Freilaufanordnung nach einem der vorhergehenden Ansprüche, wobei der Freilauf (4) als ein Klemmrollenfreilauf ausgebildet ist.

11. Fahrzeug, umfassend eine Freilaufanordnung (1) nach einem der vorhergehenden Ansprüche.

12. Fahrzeug nach Anspruch 11, ferner umfassend eine Antriebseinheit (102), welche drehmomentübertragend mit dem Zahnrad (2) verbunden ist, und einen Kurbeltrieb (104), welcher, insbesondere drehfest, mit der Abtriebswelle (3) verbunden ist.

## Claims

1. Freewheel arrangement of a vehicle (100), in particular of an electric bicycle, comprising:
- a gearwheel (2),
- an output shaft (3),
- a freewheel (4),
- a frictional element (5), and
- a housing (6),
- wherein the freewheel (4) is configured to bring about a torque transmission from the gearwheel (2) to the output shaft (3) in the case of a relative rotation of the gearwheel (2) and the output shaft (3) in the blocking direction (42), and to prevent the torque transmission in the case of a relative rotation of the gearwheel (2) and the output shaft (3) in the freewheel direction (41),
wherein
- the housing (6) is a fixed part, relative to which the gearwheel (2) and the output shaft (3) are arranged so as to be rotatable, and
- **characterized in that**
the frictional element (5) is designed to generate a predetermined frictional moment (45) directly between the gearwheel (2) and the housing (6).

2. Freewheel arrangement according to Claim 1, comprising at least one pair of frictional elements (5) which are diametrically opposite with respect to the output shaft (3).

3. Freewheel arrangement according to either of the preceding claims, wherein the frictional element (5) is designed in such a way that the frictional moment (45) is generated by means of a radial frictional force (45a).

4. Freewheel arrangement according to one of the preceding claims, wherein the frictional element (5) is designed in such a way that the frictional moment (45) is generated by means of an axial frictional force (45b).

5. Freewheel arrangement according to one of the preceding claims, wherein the frictional element (5) has a friction arm (51) and a friction ring (52) which are in mechanical contact with one another in order to generate the frictional moment (45).

6. Freewheel arrangement according to Claim 5, wherein the friction arm (51) is fixed to the gearwheel (2), and wherein the friction ring (52) is fixed to the housing (6).

7. Freewheel arrangement according to Claim 5, wherein the friction arm (51) is fixed to the housing (6), and wherein the friction ring (52) is fixed to the gearwheel (2).

8. Freewheel arrangement according to one of Claims 5 to 7, wherein the friction arm (51) is of sheet-metal form.

9. Freewheel arrangement according to one of Claims 5 to 8, wherein the friction arm (51) has a base region (51a) and at least one friction region (51b), wherein the friction region (51b) extends in the circumferential direction starting from the base region (51a), and wherein the friction region (51b) has a friction surface (51c) which is in contact with the friction ring (52).

10. Freewheel arrangement according to one of the preceding claims, wherein the freewheel (4) is designed as a clamping roller freewheel.

11. Vehicle, comprising a freewheel arrangement (1) according to one of the preceding claims.

12. Vehicle according to Claim 11, furthermore comprising a drive unit (102), which is connected to the gearwheel (2) in a torque-transmitting manner, and a crank drive (104), which is connected to the output shaft (3), in particular in a rotationally fixed manner.

## Revendications

1. Agencement de roue libre d'un véhicule (100), en particulier d'un vélo électrique, comprenant :
- une roue dentée (2),
- un arbre de sortie (3),
- une roue libre (4),
- un élément de friction (5), et
- un boîtier (6),
- dans lequel la roue libre (4) est conçue pour provoquer un transfert de couple de la roue dentée (2) à l'arbre de sortie (3) en cas de rotation relative de la roue dentée (2) et de l'arbre de sortie (3) dans le sens de blocage (42), et pour empêcher le transfert de couple en cas de rotation relative de la roue dentée (2) et de l'arbre de sortie (3) dans le sens de roue libre (41),
dans lequel
- le boîtier (6) est une pièce fixe par rapport à laquelle la roue dentée (2) et l'arbre de sortie (3) sont disposés de manière rotative, et
- **caractérisé en ce que**
l'élément de friction (5) est réalisé pour produire un couple de friction prédéterminé (45) directement entre la roue dentée (2) et le boîtier (6).

2. Agencement de roue libre selon la revendication 1, comprenant au moins une paire d'éléments de friction (5) diamétralement opposés par rapport à l'arbre de sortie (3).

3. Agencement de roue libre selon l'une des revendications précédentes, dans lequel l'élément de friction (5) est réalisé de manière à produire le couple de friction (45) par l'intermédiaire d'une force de friction radiale (45a).

4. Agencement de roue libre selon l'une des revendications précédentes, dans lequel l'élément de friction (5) est réalisé de manière à produire le couple de friction (45) par l'intermédiaire d'une force de friction axiale (45b).

5. Agencement de roue libre selon l'une des revendications précédentes, dans lequel l'élément de friction (5) présente un bras de friction (51) et une bague de friction (52), lesquels sont en contact mécanique l'un avec l'autre pour produire le couple de friction (45).

6. Agencement de roue libre selon la revendication 5, dans lequel le bras de friction (51) est fixé à la roue dentée (2), et dans lequel la bague de friction (52) est fixée au boîtier (6).

7. Agencement de roue libre selon la revendication 5, dans lequel le bras de friction (51) est fixé au boîtier (6), et dans lequel la bague de friction (52) est fixée à la roue dentée (2).

8. Agencement de roue libre selon l'une des revendications 5 à 7, dans lequel le bras de friction (51) est réalisé en forme de tôle.

9. Agencement de roue libre selon l'une des revendications 5 à 8, dans lequel le bras de friction (51) présente une région de base (51a) et au moins une région de friction (51b), dans lequel la région de friction (51b) s'étend à partir de la région de base (51a) dans la direction périphérique, et dans lequel la région de friction (51b) présente une surface de friction (51c) qui est en contact avec la bague de friction (52).

10. Agencement de roue libre selon l'une des revendications précédentes, dans lequel la roue libre (4) est réalisée sous la forme de roue libre à rouleaux de serrage.

11. Véhicule, comprenant un agencement de roue libre (1) selon l'une des revendications précédentes.

12. Véhicule selon la revendication 11, comprenant en outre une unité d'entraînement (102), laquelle est reliée à la roue dentée (2) de manière à transmettre un couple, et une transmission à manivelle (104), laquelle est reliée, en particulier de manière solidaire en rotation, à l'arbre de sortie (3).
